# EUROPÄISCHE PATENTSCHRIFT

(11) **EP 3 256 234 B1**
(45) Veröffentlichungstag und Bekanntmachung des Hinweises auf die Patenterteilung: **05.08.2020**
(21) Anmeldenummer: 16700563.6
(22) Anmeldetag: 13.01.2016
(51) Int. Cl.: B01D 53/04, B01D 53/26

(54) **LUFTTROCKNERÜBERWACHUNG ÜBER DIE CO2-KONZENTRATION**
AIR DRYER MONITORING VIA THE CO2-CONCENTRATION
PROCÉDÉ DE SURVEILLANCE D'UN DÉSHUMIDIFICATEUR D'AIR PAR L'INTERMÉDIAIRE DE LA CONCENTRATION EN CO2

(30) Priorität: 29.01.2015 DE 102015101297
(43) Veröffentlichungstag der Anmeldung: 20.12.2017
(73) Patentinhaber: KNORR-BREMSE Systeme für Nutzfahrzeuge GmbH, 80809 München (DE)
(72) Erfinder: KRABOT, Matyas, 2310 Szigetszentmiklós (HU); FUCHS, András, 2071 Páty (HU); BALAZS, Gal, 1025 Budapest (HU)
(86) Internationale Anmeldenummer: PCT/EP2016/050516
(87) Internationale Veröffentlichungsnummer: WO 2016/120064

(56) Entgegenhaltungen:
- EP-A1- 0 716 274
- WO-A1-94/07726
- DE-A1- 3 445 699
- US-A1- 2014 144 326

## Beschreibung

Die Erfindung bezieht sich auf ein Druckluftversorgungssystem für ein Fahrzeug mit einem Lufttrockner.

### Stand der Technik

In einem Druckluftversorgungssystem für ein Fahrzeug wird Luft durch einen Kompressor aus der Atmosphäre angesaugt und durch einen Lufttrockner geleitet. Der Lufttrockner enthält ein feuchtigkeitsadsorbierendes Medium. Dieses Medium kann nur eine begrenzte Menge an Feuchtigkeit aufnehmen, bevor es gesättigt ist. Wenn es gesättigt ist, muss es regeneriert oder ausgetauscht werden. Wird es nicht rechtzeitig regeneriert oder ausgetauscht, kann Feuchtigkeit in das Druckluftversorgungssystem eindringen und dort Korrosion verursachen.

Selbst wenn das Medium regeneriert werden kann, ohne ausgetauscht zu werden, ist dieser Prozess teuer, weil dafür eine große Menge Druckluft verwendet werden muss, die zuvor unter Einsatz teuren Treibstoffs hergestellt wurde. In bestimmten Betriebszuständen des Fahrzeugs kann die Regeneration auch nachteilig zeitlich mit einem hohen Druckluftbedarf der Druckluftbremsen oder anderer Druckluftverbraucher oder auch mit einem hohen Bedarf an Antriebsmoment für das Bewältigen einer Steigung zusammenfallen. Es besteht daher ein Bedürfnis, die Regenerationsphasen auf das notwendige Minimum zu beschränken und sinnvoll im Voraus zu planen.

Die meisten aus dem Stand der Technik bekannten Lufttrockner verwenden mathematische Modelle, um auf der Basis der geförderten Druckluftmenge den aktuellen Zustand des feuchtigkeitsadsorbierenden Mediums zu errechnen. Diese Modelle können unvorhersehbare Ereignisse, wie die zusätzliche externe Befüllung des Druckluftspeichers, nicht berücksichtigen. Einige Lufttrockner verwenden auch Feuchtesensoren, um den Zustand des feuchtigkeitsadsorbierenden Mediums abzuschätzen.

Die DE 34 45 699 A1 offenbart eine Lufttrocknungseinrichtung für im Intervallbetrieb aus einem Kompressor aufladbaren Druckluftbremsanlagen von Kraftfahrzeugen.

Aus der EP-A-0716274 ist eine Absorptionsvorrichtung für eine medizintechnische Anwendung offenbart.

### Aufgabe und Lösung

Aufgabe der Erfindung ist, einen Zugang zum wahren Zustand des feuchtigkeitsadsorbierenden Mediums in einem Fahrzeugbremssystem zu schaffen und eine Sättigung des Mediums mit Feuchtigkeit möglichst frühzeitig zu erkennen.

Diese Aufgabe wird erfindungsgemäß gelöst durch ein Druckluftversorgungssystem für ein Fahrzeug mit Lufttrockner gemäß Hauptanspruch. Weitere vorteilhafte Ausgestaltungen ergeben sich aus den darauf rückbezogenen Unteransprüchen.

### Gegenstand der Erfindung

Im Rahmen der Erfindung wurde ein Druckluftversorgungssystem für ein Fahrzeug mit Lufttrockner entwickelt. Dieser umfasst ein feuchtigkeitsadsorbierendes Medium. Ein solches Medium wird häufig "Exsikkator" genannt. Erfindungsgemäß ist das feuchtigkeitsadsorbierende Medium zusätzlich dazu ausgebildet, mindestens ein Spurengas aus Luft mindestens teilweise zu adsorbieren. Im Rahmen dieser Erfindung ist ein Spurengas jeder Bestandteil von Luft, der nicht Sauerstoff, Stickstoff oder Wasserdampf ist.

Stromabwärts des feuchtigkeitsadsorbierenden Mediums ist ein Detektor, der auf dieses Spurengas sensitiv ist, als Überwachungsinstrument für eine bevorstehende Sättigung des Mediums vorgesehen.

Es wurde erkannt, dass ein und derselbe Ort auf der Oberfläche des feuchtigkeitsadsorbierenden Mediums entweder ein Wassermolekül oder ein Atom oder Molekül des Spurengases adsorbieren kann. Wenn sich also das Medium der Sättigung nähert, wird auch seine Fähigkeit abnehmen, das Spurengas zu adsorbieren. Das bedeutet, dass stromabwärts des feuchtigkeitsadsorbierenden Mediums die Konzentration des Spurengases zunimmt. Dieser Zuwachs kann als Frühwarnung genutzt werden, dass das Medium sich der Sättigungsgrenze nähert. Die Konzentration des Spurengases stromabwärts des Mediums ist ein Maß für den wahren Zustand des Mediums und ermöglicht eine viel genauere Einschätzung als bisher, wie viel Feuchtigkeit noch adsorbiert werden kann, bevor eine Regeneration fällig ist. Die Konzentration des Spurengases ist auch ein Maß dafür, welchen Umfang diese Regeneration haben muss.

Gemäß der Erfindung ist der Detektor mit einer Auswerteeinheit verbunden. Diese Auswerteeinheit interpretiert es als bevorstehende Sättigung des feuchtigkeitsadsorbierenden Mediums, wenn die Konzentration des Spurengases einen ersten Schwellwert überschreitet. Ein weiteres Ansteigen der Spurengaskonzentration auf ein Maximum, das von einem Abfall unter einen zweiten Schwellwert gefolgt ist, wird als vollständige Sättigung des feuchtigkeitsadsorbierenden Mediums mit Feuchtigkeit interpretiert. Hierhinter steckt die Überlegung, dass nach vollständiger Sättigung des adsorbierenden Mediums mit Feuchtigkeit die Feuchtigkeit zum Detektor vordringen wird. Nach dem Dalton'schen Gesetz wird sie dabei durch ihren Partialdruck einen Teil des Spurengases aus der Luft verdrängen. Daher wird der Detektor eine abnehmende Konzentration des Spurengases registrieren. Dies gibt dem Fahrzeugführer eine genauere Rückmeldung darüber, ob eine Regeneration noch aufgeschoben werden kann oder ob sie unvermeidlich fällig ist.

Vorteilhaft weist das feuchtigkeitsadsorbierende Medium eine offene Porosität auf, durch die Luft hindurchtreten kann, und der mittlere Durchmesser der Poren reicht mindestens aus, um Atome oder Moleküle des Spurengases passieren zu lassen. Die inneren Oberflächen der Poren können dann nur mit Feuchtigkeit oder mit dem Spurengas belegt sein. Verunreinigungen, die größer sind als der mittlere Durchmessser der Poren, können deren innere Oberflächen nicht belegen.

Vorteilhaft beträgt der mittlere Porendurchmesser zwischen 0,6 nm und 1,1 nm, bevorzugt zwischen 0,8 nm und 1 nm. Bei einem Durchmesser in diesem Bereich können entlang des Innenumfangs der Wandung mehrere Wassermoleküle angelagert werden, ohne sich gegenseitig zu behindern. Die innere Oberfläche der Poren kann dann optimal genutzt werden.

Vorteilhaft ist das feuchtigkeitsadsorbierende Medium ein Zeolit. Zeolite haben eine selbstorganisierte innere Porosität. Das Medium kann insbesondere ein Faujasit und hier beispielsweise ein Aluminosilikat, d.h. mit SiO₂ aktiviertes Al₂O₃, sein. Es kann optional noch mit weiteren Komponenten, wie beispielsweise Na₂O und/oder Fe₂O₃, aktiviert sein. Das unter dem Handelsnamen "Köstrolith NaMSX" vermarktete Medium etwa hat innere Poren mit einem mittleren Durchmesser von 0,9 nm.

In einer vorteilhaften Ausgestaltung der Erfindung sind die Moleküle des Spurengases größer als Wassermoleküle. Wenn das adsorbierende Medium sich der Sättigung nähert, verliert es zuerst die Fähigkeit, die größeren Spurengasmoleküle zu adsorbieren, bevor es später auch die Fähigkeit verliert, die kleineren Wassermoleküle zu adsorbieren. Wenn also der Detektor stromabwärts des Mediums eine erhöhte Konzentration des Spurengases registriert, bleibt noch etwas Zeitreserve, bevor die Regeneration des Mediums gestartet werden muss.

In einer besonders vorteilhaften Ausgestaltung der Erfindung ist das Spurengas Kohlendioxid. Es ist nach Stickstoff, Sauerstoff und Argon der Bestandteil mit der größten Konzentration in normaler Luft. Sein Molekül ist auch größer als das Wassermolekül. Argon ist in Luft deutlich höher konzentriert, aber es ist einatomig, und ein einzelnes Argon-Atom ist kleiner als ein Wassermolekül.

Der Detektor ist vorteilhaft ein optischer Absorptionsdetektor. Kohlendioxid etwa kann sehr einfach durch Messung der Infrarot-Absorption detektiert werden. Die hierfür nötigen Baugruppen sind in einer kleinen Baugröße und auch mit der für den Einsatz in Fahrzeugen geforderten Robustheit am Markt verfügbar. Im Kontext der Erfindung kann aber auch jeder andere geeignete Detektor für das Spurengas eingesetzt werden. Vorteilhaft ist der dazu ausgebildet, eine Referenzmessung der Intensität der Lichtquelle vorzunehmen. Große Änderungen dieser Intensität zeigen eine Verschmutzung des Sensors an, die im Aufbau gemäß der Erfindung nur dann auftreten kann, wenn das feuchtigkeitsabsorbierende Medium beschädigt ist. Es kann also mit nur einem Sensor das Medium gleichzeitig auf Sättigung und auf Beschädigung überwacht werden.

In einer weiteren vorteilhaften Ausgestaltung der Erfindung weist der Lufttrockner einen stromaufwärts des feuchtigkeitsadsorbierenden Mediums angeordneten Einlass für die Hinzufügung des Spurengases zu der Luft auf. Dann kann ein für die Überwachung auf Sättigung noch besser geeignetes Spurengas verwendet werden, um den Preis, dass dieses in einem separaten Behälter im Fahrzeug mitgeführt werden muss.

Das erfindungsgemäße Druckluftversorgungssystem für ein Fahrzeug umfasst einen Kompressor zum Einsaugen von Luft aus der Atmosphäre, einen erfindungsgemäßen Lufttrockner sowie mindestens einen Druckluftverbraucher. Der Druckluftverbraucher kann beispielsweise eine Druckluftbremsanlage oder eine Luftfederung sein. Je mehr Druckluftverbraucher das Fahrzeug hat, desto wichtiger wird es, die Regeneration klug im Voraus zu planen.

In einer besonders vorteilhaften Ausgestaltung der Erfindung kann das Druckluftversorgungssystem zum Einen in einem Förderbetrieb betrieben werden, in dem der Lufttrockner vom Kompressor geförderte Luft trocknet. Zum Anderen kann es in einem Regenerationsbetrieb betrieben werden kann, in dem trockene Luft in der umgekehrten Richtung durch den Lufttrockner geleitet wird. Im Regenerationsbetrieb passiert die Luft nach dem feuchtigkeitsadsorbierenden Medium einen zweiten Detektor für ein Spurengas, zu dessen mindestens teilweiser Adsorption das feuchtigkeitsadsorbierende Medium zusätzlich ausgebildet ist. Dieses Spurengas kann identisch mit dem zuvor beschriebenen ersten Spurengas sein, es kann aber auch ein anderes Spurengas sein. Wenn der zweite Detektor eine abnehmende Konzentration des Spurengases registriert, zeigt dies an, dass die Regeneration sich ihrem erfolgreichen Abschluss nähert. Die Menge an wertvoller Druckluft, die für die Regeneration verwendet wird, kann also auf den aktuellen Bedarf hin maßgeschneidert werden; es ist nicht mehr notwendig, mit Schätzungen zu arbeiten.

### Spezieller Beschreibungsteil

Nachfolgend wird der Gegenstand der Erfindung an Hand einer Figur erläutert, ohne dass der Gegenstand der Erfindung hierdurch beschränkt wird. Es ist gezeigt:

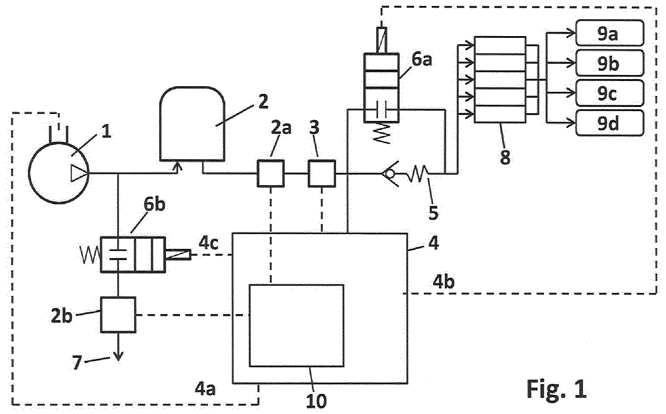

Figur 1: Ausführungsbeispiel des erfindungsgemäßen Druckluftversorgungssystems.
Figur 1 zeigt ein Druckluftversorgungssystem für ein Fahrzeug gemäß einem Ausführungsbeispiel der Erfindung. Luft wird durch den Kompressor 1 eingesaugt und durch das feuchtigkeitsadsorbierende Medium 2 geleitet. Stromabwärts dieses Mediums passiert die Luft einen Kohlendioxidsensor 2a und einen Drucksensor 3. Die Messdaten dieser Sensoren werden einer elektronischen Steuereinheit 4 zugeführt.

Die getrocknete Druckluft passiert ein Rückschlagventil 5 und wird über ein Mehrkreisschutzventil 8 den verschiedenen Druckluftverbrauchern 9a, 9b, 9c und 9d zugeführt.

Die elektronische Steuereinheit 4 schaltet auf der Basis der vom Drucksensor 3 gelieferten Messdaten den Kompressor 1 über die Steuerleitung 4a ein und aus. Auf der Basis der vom Kohlendioxidsensor 2a gelieferten Messdaten startet sie auch die Regeneration des Mediums 2. Dazu werden über die Steuerleitungen 4b und 4c Magnetventile 6a und 6b betätigt. Das Rückschlagventil 5 wird umgangen, und trockene Luft aus dem Druckluftsystem wird in rückwärtiger Richtung durch das feuchtigkeitsadsorbierende Medium 2 geleitet. Die mit Feuchtigkeit beladene Luft wird durch das Magnetventil 6b einem zweiten Kohlendioxidsensor 2b zugeleitet. Zu Beginn der Regeneration wird dieser Sensor 2b eine hohe Kohlendioxid-Konzentration registrieren, weil zum Einen Kohlendioxid aus dem Medium 2 extrahiert wurde und zum Anderen dieses Medium aus der Luft, die in rückwärtiger Richtung durch das Medium geleitet wurde, kein Kohlendioxid adsorbieren konnte. Wenn die Regeneration fortschreitet, wird das Kohlendioxid aus dem Medium 2 entfernt, und das Medium 2 kann Kohlendioxid aus der Regenerationsluft aufnehmen. Die vom Sensor 2b registrierte Konzentration wird also abnehmen. Hinter dem Sensor 2b wird die Luft durch den Auslass 7 in die Atmosphäre abgeführt.

Beide Sensoren 2a und 2b sind mit einer Auswerteeinheit 10 verbunden, die innerhalb der elektronischen Steuereinheit 4 untergebracht ist. Eine Zunahme der Kohlendioxid-Konzentration über einen ersten Schwellwert wird als bevorstehende Sättigung des Mediums mit Feuchtigkeit interpretiert. Steigt die Konzentration noch weiter auf ein Maximum an und nimmt sie anschließend unter einen zweiten Schwellwert ab, wird dies als vollständige Sättigung interpretiert.

### Bezugszeichenliste

- 1: Kompressor
- 2: feuchtigkeitsadsorbierendes Medium
- 2a, 2b: Kohlendioxidsensoren
- 3: Drucksensor
- 4: elektronische Steuereinheit (ECU)
- 4a: Steuerleitung für Kompressor 1
- 4b, 4c: Steuerleitungen für Magnetventile 6a, 6b
- 5: Rückschlagventil
- 6a, 6b: Magnetventile im Regenerationspfad
- 7: Auslass
- 8: Mehrkreisschutzventil
- 9a, 9b, 9c, 9d: Druckluftverbraucher im Fahrzeug
- 10: Auswerteeinheit

## Patentansprüche

1. Druckluftversorgungssystem für ein Fahrzeug mit einem Lufttrockner (2, 2a, 2b), wobei der Lufttrockner (2, 2a, 2b) ein feuchtigkeitsadsorbierendes Medium (2) umfasst,
**dadurch gekennzeichnet, dass**
das feuchtigkeitsadsorbierende Medium (2) zusätzlich dazu ausgebildet ist, mindestens ein Spurengas aus Luft mindestens teilweise zu adsorbieren, wobei die Absorption des Spurengases ein Maß für das aktuelle Absorptionsvermögen des feuchtigkeitsabsorbierenden Mediums ist und dass stromabwärts des feuchtigkeitsadsorbierenden Mediums (2) mindestens ein Detektor (2a), der auf dieses Spurengas sensitiv ist, als Überwachungsinstrument für eine bevorstehende Sättigung des Feuchtigkeitsabsorptionsvermögen des Mediums (2) vorgesehen ist, wobei der Detektor (2a) mit einer Auswerteeinheit (10) verbunden ist, die
- es als bevorstehende Sättigung des feuchtigkeitsadsorbierenden Mediums (2) interpretiert, wenn die Konzentration des Spurengases einen ersten Schwellwert überschreitet, und
- ein weiteres Ansteigen der Spurengaskonzentration auf ein Maximum, das von einem Abfall unter einen zweiten Schwellwert gefolgt ist, als vollständige Sättigung des feuchtigkeitsadsorbierenden Mediums (2) mit Feuchtigkeit interpretiert.

2. Druckluftversorgungssystem nach Anspruch 1, **dadurch gekennzeichnet, dass** das das feuchtigkeitsadsorbierende Medium (2) eine offene Porosität aufweist, durch die Luft hindurchtreten kann, wobei der mittlere Durchmesser der Poren mindestens ausreicht, um Atome oder Moleküle des Spurengases passieren zu lassen.

3. Druckluftversorgungssystem nach Anspruch 2, **dadurch gekennzeichnet, dass** der mittlere Durchmesser der Poren zwischen 0,6 nm und 1,1 nm, bevorzugt zwischen 0,8 nm und 1 nm, beträgt.

4. Druckluftversorgungssystem nach einem der Ansprüche 2 bis 3, **dadurch gekennzeichnet, dass** das feuchtigkeitsadsorbierende Medium (2) ein Zeolit ist.

5. Druckluftversorgungssystem nach Anspruch 4, **dadurch gekennzeichnet, dass** das feuchtigkeitsadsorbierende Medium (2) ein Aluminosilikat enthält.

6. Druckluftversorgungssystem nach einem der Ansprüche 1 bis 5, **dadurch gekennzeichnet, dass** die Moleküle des Spurengases größer als Wassermoleküle sind.

7. Druckluftversorgungssystem nach einem der Ansprüche 1 bis 6, **dadurch gekennzeichnet, dass** das Spurengas Kohlendioxid ist.

8. Druckluftversorgungssystem nach einem der Ansprüche 1 bis 7, **dadurch gekennzeichnet, dass** der Detektor (2a, 2b) ein optischer Absorptionsdetektor ist.

9. Druckluftversorgungssystem nach Anspruch 8, **dadurch gekennzeichnet, dass** der Detektor (2a, 2b) dazu ausgebildet ist, eine Referenzmessung der Intensität der Lichtquelle vorzunehmen.

10. Druckluftversorgungssystem nach einem der Ansprüche 1 bis 9, **dadurch gekennzeichnet, dass** er einen stromaufwärts des feuchtigkeitsadsorbierenden Mediums (2) angeordneten Einlass für die Hinzufügung des Spurengases zu der Luft aufweist.

11. Druckluftversorgungssystem nach einem der vorherigen Ansprüche, umfassend einen Kompressor (1) zum Einsaugen von Luft aus der Atmosphäre, sowie mindestens einen Druckluftverbraucher (9a, 9b, 9c, 9d).

12. Druckluftversorgungssystem nach Anspruch 11, welches in einem Förderbetrieb betrieben werden kann, in dem der Lufttrockner (2, 2a, 2b) vom Kompressor (1) geförderte Luft trocknet, und welches in einem Regenerationsbetrieb betrieben werden kann, in dem trockene Luft in der umgekehrten Richtung durch den Lufttrockner (2, 2a, 2b) geleitet wird, **dadurch gekennzeichnet, dass** die Luft im Regenerationsbetrieb nach dem feuchtigkeitsadsorbierenden Medium (2) einen zweiten Detektor (2b) für ein Spurengas, zu dessen mindestens teilweiser Adsorption das feuchtigkeitsadsorbierende Medium (2) zusätzlich ausgebildet ist, passiert.

## Claims

1. Compressed air supply system for a vehicle, having an air dryer (2, 2a, 2b), the air dryer (2, 2a, 2b) comprising a moisture absorbing medium (2),
**characterised in that**
the moisture absorbing medium (2) is additionally designed to at least partly absorb at least one trace gas from air, wherein the absorption of the trace gas is a measure for the current absorption capacity of the moisture absorbing medium, and **in that** at least one detector (2a) that is sensitive to said trace gas is provided downstream of the moisture absorbing medium (2) as a monitoring instrument for the impending saturation of the medium (2), wherein the detector (2a) is connected to an evaluation unit (10), which
- interprets it as the impending saturation of the moisture absorbing medium (2) if the concentration of the trace gas exceeds a first threshold value, and
- interprets a further increase of the concentration of trace gas to a maximum followed by a decrease to below a second threshold value as full saturation of the moisture absorbing medium (2) with moisture.

2. Compressed air supply system according to claim 1, **characterised in that** the moisture absorbing medium (2) has an open porosity through which air can enter, wherein the average diameter of the pores is at least sufficient to allow atoms or molecules of the trace gas to pass.

3. Compressed air supply system according to claim 2, **characterised in that** the average diameter of the pores is between 0.6 nm and 1.1 nm, preferably between 0.8 nm and 1 nm.

4. Compressed air supply system according to claim 2 or 3, **characterised in that** the moisture absorbing medium (2) is a zeolite.

5. Compressed air supply system according to claim 4, **characterised in that** the moisture absorbing medium (2) contains an aluminosilicate.

6. Compressed air supply system according to any of claims 1 to 5, **characterised in that** the molecules of the trace gas are larger than water molecules.

7. Compressed air supply system according to any of claims 1 to 6, **characterised in that** the trace gas is carbon dioxide.

8. Compressed air supply system according to any of claims 1 to 7, **characterised in that** the detector (2a, 2b) is an optical absorption detector.

9. Compressed air supply system according to claim 8, **characterised in that** the detector (2a, 2b) is designed to perform a reference measurement of the intensity of the light source.

10. Compressed air supply system according to any of claims 1 to 9, **characterised in that** it comprises an inlet for the addition of the trace gas to the air that is disposed upstream of the moisture absorbing medium (2).

11. Compressed air supply system according to any of the preceding claims, comprising a compressor (1) for drawing in air from the atmosphere and at least one compressed air consumer (9a, 9b, 9c, 9d).

12. Compressed air supply system according to claim 11, which can be operated in a transport mode in which the air dryer (2, 2a, 2b) dries air delivered by the compressor (1), and which can be operated in a regeneration mode in which dry air is passed in the reverse direction through the air dryer (2, 2a, 2b), **characterised in that**, in the regeneration mode, after the moisture absorbing medium (2) the air passes a second detector (2b) for a trace gas, for the at least partial adsorption of which the moisture absorbing medium (2) is additionally designed.

## Revendications

1. Système d'alimentation en air comprimé d'un véhicule, comprenant un déshumidificateur (2, 2a, 2b) d'air, le déshumidificateur (2, 2a, 2b) d'air comprenant un milieu (2) adsorbant l'humidité,
**caractérisé en ce que**
le milieu (2) adsorbant l'humidité est constitué, en outre, pour adsorber, au moins en partie, un gaz sous forme de trace dans l'air, l'absorption du gaz sous forme de trace étant une mesure du pouvoir d'absorption présent du milieu absorbant l'humidité et **en ce qu'**en aval du milieu (2) adsorbant l'humidité est prévu au moins un détecteur (2a) sensible à ce gaz sous forme de trace, comme instrument de contrôle d'une saturation imminente du pouvoir d'absorption de l'humidité du milieu (2), le détecteur (2a) étant relié à une unité (10) d'exploitation, qui
- interprète comme une saturation imminente du milieu (2) adsorbant l'humidité, que la concentration du gaz sous forme de trace dépasse une première valeur de seuil, et
- interprète une augmentation supplémentaire de la concentration en gaz sous forme de trace jusqu'à un maximum, qui est suivi d'une chute en dessous d'une deuxième valeur de seuil, comme une saturation complète par de l'humidité du milieu (2) adsorbant l'humidité.

2. Système d'alimentation en air comprimé suivant la revendication 1, **caractérisé en ce que** le milieu (2) adsorbant l'humidité a une porosité ouverte, dans laquelle de l'air peut pénétrer, le diamètre moyen des pores étant au moins suffisant pour laisser passer des atomes ou des molécules du gaz sous forme de trace.

3. Système d'alimentation en air comprimé suivant la revendication 2, **caractérisé en ce que** le diamètre moyen des pores est compris entre 0,6 nm et 1,1 nm, de préférence entre 0,8 nm et 1 nm.

4. Système d'alimentation en air comprimé suivant l'une des revendications 2 à 3, **caractérisé en ce que** le milieu (2) adsorbant l'humidité est une zéolite.

5. Système d'alimentation en air comprimé suivant la revendication 4, **caractérisé en ce que** le milieu (2) adsorbant l'humidité contient un aluminosilicate.

6. Système d'alimentation en air comprimé suivant l'une des revendications 1 à 5, **caractérisé en ce que** les molécules du gaz sous forme de trace sont plus grandes que des molécules d'eau.

7. Système d'alimentation en air comprimé suivant l'une des revendications 1 à 6, **caractérisé en ce que** le gaz sous forme de trace est du dioxyde de carbone.

8. Système d'alimentation en air comprimé suivant l'une des revendications 1 à 7, **caractérisé en ce que** le détecteur (2a, 2b) est un détecteur d'absorption optique.

9. Système d'alimentation en air comprimé suivant la revendication 8, **caractérisé en ce que** le détecteur (2a, 2b) est constitué pour effectuer une mesure de référence de l'intensité de la source lumineuse.

10. Système d'alimentation en air comprimé suivant l'une des revendications 1 à 9, **caractérisé en ce qu'**il a, pour l'addition du gaz sous forme de trace à l'air, une entrée disposée en amont du milieu (2) adsorbant l'humidité.

11. Système d'alimentation en air comprimé suivant l'une des revendications précédentes, comprenant un compresseur (1) d'aspiration de l'air de l'atmosphère, ainsi qu'au moins un consommateur (9a, 9b, 9c, 9d) d'air comprimé.

12. Système d'alimentation en air comprimé suivant la revendication 11, qui peut fonctionner suivant un fonctionnement de refoulement, dans lequel le déshumidificateur (2, 2a, 2b) d'air sèche de l'air refoulé par le compresseur (1), et qui peut fonctionner dans un fonctionnement de régénération, dans lequel de l'air sec est envoyé en sens contraire dans le déshumidificateur (2, 2a, 2b) d'air, **caractérisé en ce que** l'air dans le fonctionnement en régénération passe après le milieu (2) adsorbant l'humidité dans un deuxième détecteur (2b) d'un gaz sous forme de trace, pour l'adsorption, au moins en partie, duquel le milieu (2) adsorbant l'humidité est, en outre, constitué.
